Europäisches Patentamt

European Patent Office

Office européen des brevets

(19)

(11) Numéro de publication: **0 092 465**
**A1**

(12) # DEMANDE DE BREVET EUROPEEN

(21) Numéro de dépôt: 83400725.4

(51) Int. Cl.³: **H 04 N 9/04**

(22) Date de dépôt: **12.04.83**

(30) Priorité: **23.04.82 FR 8207065**

(43) Date de publication de la demande: **26.10.83**
**Bulletin 83/43**

(84) Etats contractants désignés: **DE GB NL**

(71) Demandeur: **THOMSON-CSF, 173, Boulevard Haussmann, F-75379 Paris Cedex 08 (FR)**

(72) Inventeur: **Pham van Cang, Luc, THOMSON-CSF SCPI 173, bld Haussmann, F-75379 Paris Cedex 08 (FR)**

(74) Mandataire: **Lincot, Georges et al, THOMSON-CSF SCPI 173, Bld Haussmann, F-75379 Paris Cedex 08 (FR)**

(54) **Dispositif de commande de correction et système d'établissement automatique de données de correction d'une caméra de télévision.**

(57) Le dispositif de commande de correction de la caméra (1) de télévision reliée à son équipement de voies de caméra (2) comprend une mémoire de masse (13) contenant les données de correction de la caméra, une mémoire de correction (5, 8, 18), un calculateur numérique (3) pour transférer les données de correction contenues dans la mémoire de masse (13) à l'intérieur de la mémoire de correction ainsi que des circuits de correction (7, 10) sensibles aux données de correction contenues dans la mémoire de correction (5, 8, 18) pour agir sur les circuits de réglage de la caméra (6) et/ou de l'équipement de voies (2).

Application: Equipements de studios de télévision.

ACTORUM AG

1

# Dispositif de commande de correction et système d'établissement automatique de données de correction d'une caméra de télévision

La présente invention concerne un dispositif de commande de correction et un système d'établissement automatique de données de correction, d'une caméra de télévision.

Dans l'état actuel de la technique, il est connu de munir l'équipement de voies de caméra, de moyens de réglage, de contrôle et de correction évolués, constitués par des micro-processeurs couplés à des moyens de mémorisation pour mémoriser les données et exécuter les différents programmes de commande et de surveillance. Ces différents moyens sont regroupés dans un caisson généralement séparé de la caméra. Le caisson comprend également un moniteur de contrôle commandé par un opérateur. En fonctionnement normal l'opérateur peut, à partir du pupitre du moniteur, ajuster le niveau de sortie des signaux délivrés par la caméra, régler les niveaux du blanc et du noir, agir sur l'ouverture des diaphragmes, observer la qualité des images transmises, contrôler les paramètres de tension et de courant de faisceaux et de cible qui régissent le fonctionnement du tube d'analyse de la caméra.

Toutefois, l'évaluation du ou des défauts à corriger, la réalisation de la correction restent des actions ponctuelles, accomplies par un automate disposant de programmes et de moyens qui sont ceux qui ont été mis au point au moment de la mise en service de la caméra et qu'il est difficile de faire évoluer lorsque les conditions d'exploitation deviennent différentes de celles pour lesquelles la caméra était initialement réglée. Cette situation est encore plus contraignante, lorsque par exemple, une caméra pour cause de mauvais fonctionnement doit être remplacée, car il n'est pas certain que l'équipement de voies de l'ancienne caméra dispose de moyens de correction qui conviennent au bon fonctionnement de la nouvelle caméra mise en remplacement. Dans ces conditions, c'est souvent l'ensemble constitué par la caméra et l'équipement qui doivent être remplacés. Un autre inconvénient réside dans la complexité et par conséquent dans le prix de revient de l'équipement de voies lui-même qui peut comprendre, pour satisfaire par exemple les conditions d'exploitation d'un studio, un nombre important d'appareils. L'ensemble de ces appareils peut être constitué par des moniteurs, des oscilloscopes de profil, des vectorscopes, des voltmètres vidéo ainsi que divers générateurs de signaux vidéo.

L'invention a pour but de remédier à ces inconvénients à l'aide d'un dispositif de commande d'une caméra de télévision constitué d'un ensemble homogène et cohérent de moyens permettant l'évaluation et la caractérisation des défauts du signal vidéo délivré par la caméra de télévision, d'agir et de corriger le signal entâché de défauts et de communiquer les défauts et les paramètres de correction à l'opérateur et à son environnement.

A cet effet l'invention a pour objet un dispositif de commande de correction d'une caméra de télévision reliée à un équipement de voies de caméra caractérisé en ce qu'il comprend une mémoire de masse contenant les données de correction de la caméra, une mémoire de correction, un calculateur numérique pour transférer automatiquement les données de correction contenues dans la mémoire de masse à l'intérieur de la mémoire de correction, ainsi que des circuits de correction sensibles aux données de correction contenues dans la mémoire de correction pour agir sur les circuits de réglage de la caméra et/ou l'équipement de voies.

L'invention a également pour objet un système d'établissement automatique des données de correction d'une caméra de télévision mettant en oeuvre le dispositif de correction selon l'invention, le dispositif de correction étant couplé, d'une part, à un générateur de signaux de test de la caméra et d'autre part, à un dispositif de saisie et d'échantillonnage des signaux générés par la caméra, pour élaborer des données de correction afin de commander les circuits de réglage de la caméra lorsque les amplitudes des signaux vidéo reçus par le dispositif de saisie sont différentes de celles émises par le générateur de signaux de test.

D'autres caractéristiques et avantages de l'invention apparaîtront au cours de la description faite au regard des dessins annexés, donnés uniquement à titre d'exemples, qui va suivre.

- La figure 1 est une représentation générale du dispositif de correction selon l'invention.

- La figure 2 représente sous une forme synoptique les moyens d'adressage de la mémoire de correction ainsi que leur liaison avec les circuits de correction et les circuits de réglage de la caméra.

- La figure 3 représente les circuits du séquenceur d'adresses de lecture de la figure 2.

- La figure 4 représente les circuits constituant le sélecteur d'adresses de lecture et d'écriture de la figure 2.

- La figure 5 est un diagramme des temps représentant les instants de lecture et d'écriture des données de correction dans la mémoire de correction du dispositif représenté à la figure 2.

- La figure 6 est un organigramme montrant les étapes du fonctionnement du dispositif dans le mode d'écriture des informations de correction dans la mémoire de correction de la figure 2.

- La figure 7 est un organigramme montrant le déroulement des opérations de lecture des informations contenues dans la mémoire de correction du dispositif représenté à la figure 2.

La figure 8 est une représentantion d'un système d'établissement automatique des données de correction mettant en oeuvre le dispositif de correction selon l'invention.

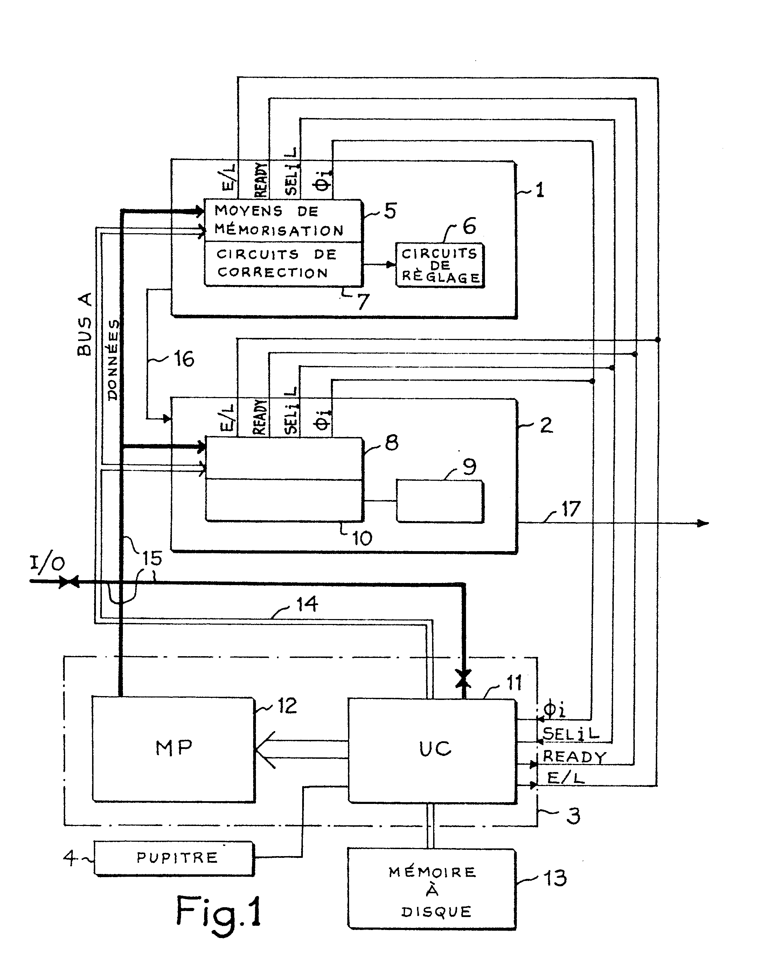

Le dispositif représenté à la figure 1 comprend une caméra 1, un équipement de voies de caméra 2, un calculateur numérique 3 et un pupitre de commande 4. La caméra 1 comprend des moyens de mémorisation de données de correction 5 reliés à des circuits de réglage 6 de la caméra par un circuit de correction 7 composé de plusieurs convertisseurs numérique-analogique. L'équipement de voies de caméra 2 comprend également des moyens de mémorisation de données de correction 8 reliés à des circuits de réglage de la voie 9 par des circuits de correction 10 composés de convertisseurs numérique-analogique. Le calculateur 3 a une structure de micro-ordinateur et est constitué de façon connue par une unité centrale de traitement de données 11 reliée à une mémoire centrale 12. L'unité centrale 11 est également reliée, d'une part, à une mémoire de masse 13 constituée par exemple d'une mémoire à disque ou d'une disquette, et d'autre part, au pupitre de commande 4 constitué par exemple par un clavier. Pour plus de détails sur les structures des micro-ordinateurs on pourra se reporter au livre intitulé "Micro-processeur et Micro-ordinateur" de R. LYON CAEN et de J.M. CROZET édité chez MASSON PARIS 1977 ou au livre intitulé "Minicomputers systems" de K. WEITZMAN édité par PRENTICE HALL INC. NEW YORK 1974. L'unité centrale 11 du calculateur 3 est reliée aux entrées d'adressage des moyens de mémorisation 5 et 8 par l'intermédiaire de la ligne d'adresses BUSA 14, et par des lignes de commande et de synchronisation E/L, READY , $\bar{\Phi}_i$ et $SEL_iL$ dont les rôles seront donnés dans la suite de la description de l'invention. Les sorties de données de la mémoire centrale 12 sont reliées aux entrées de données des moyens de mémorisation 5 et 8 et aux portes d'entrées-sorties de l'unité centrale 11 par l'intermédiaire de la ligne de données 15. Le signal vidéo élaboré par la caméra 1 est transmis à l'équipement de voies de caméra 2 par l'intermédiaire d'une ligne de transmission 16. Le signal vidéo élaboré par la voie de la caméra 2 est transmis à destination d'équipements de télévision non représentés, extérieurs au dispositif, par la ligne de liaison 17.

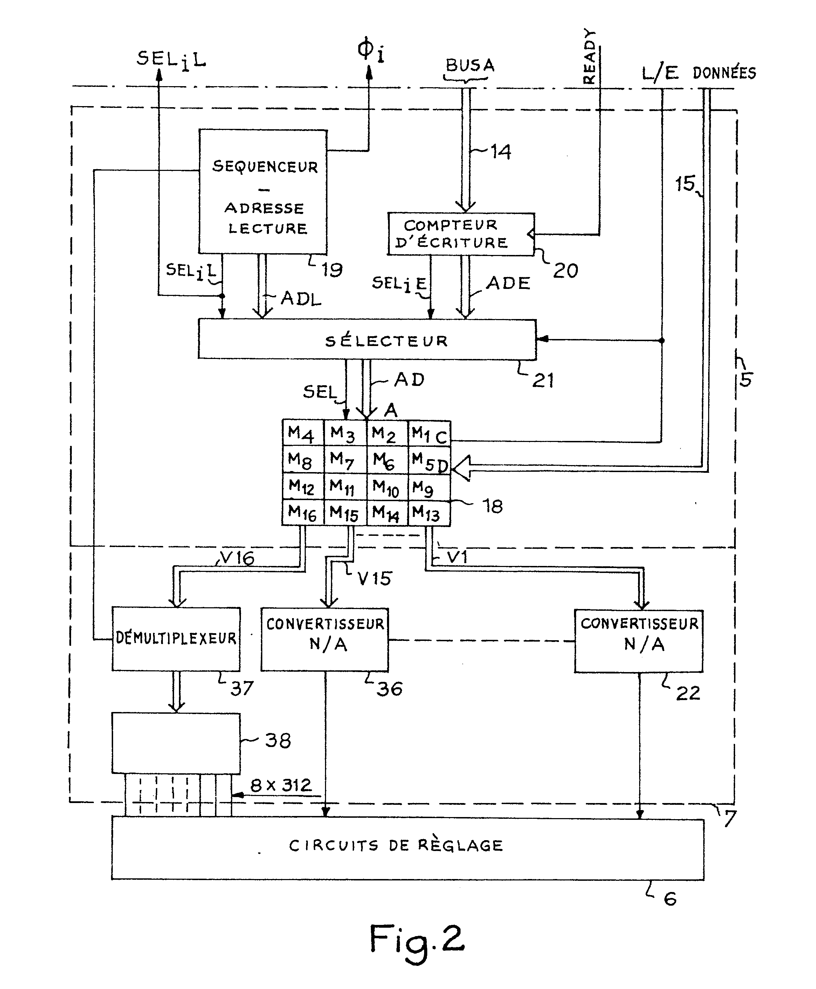

La structure des moyens de mémorisation des données de correction de la caméra et/ou de l'équipement de voie de la caméra sont représentés à l'intérieur du rectangle en pointillés 5 de la figure 2, ils comprennent une mémoire vive de correction 18 de type RAM, un séquenceur d'adresses de lecture 19 et un compteur d'écriture 20. Dans l'exemple particulier de réalisation de l'invention, la mémoire de correction 18 est constituée par un plan de mémoire composé de 16 mémoires vives élémentaires $M_1$ à $M_{16}$ ayant chacune une capacité de mémorisation de 1k/octets. Un plan de mémoire de ce type pourra être réalisé à l'aide de circuits n°. SN 6148 commercialisés par la Société INTEL. La mémoire 18 comprend une entrée d'adresses A, une entrée de commande C, une entrée de données d'écriture D et des sorties de données de lecture $V_1$ à $V_{16}$. Les entrées A , C et D sont communes à chacune des entrées correspondantes des 16 mémoires vives élémentaires, par contre les sorties $V_1$ et $V_{16}$ sont reliées respectivement aux sorties correspondantes des mémoires élémentaires $M_1$ à $M_{16}$ pour transmettre les données de correction correspondantes aux circuits de réglage 6 correspondants de la caméra par l'intermédiaire du circuit de correction 7.

Les entrées d'adresses des mémoires élémentaires de la mémoire de correction 18 sont reliées, d'une part, aux sorties d'adresses du séquenceur 19 par la ligne ADL et d'autre part, aux sorties du compteur d'écriture 20 par la ligne ADE, au travers d'un sélecteur 21 qui transmet l'une des deux adresses sélectionnées sur la ligne d'adresse AD à destination de l'entrée A de la mémoire de correction 18. Le sélecteur 21 est commandé par l'unité centrale 11 du calculateur 3 qui émet un signal de commande de lecture ou écriture sur une ligne L/E reliée à l'entrée de commande du sélecteur 21. Lorsque la ligne L/E est dans un premier état le sélecteur 21 relie la sortie du séquenceur d'adresses 19 aux entrées d'adresses de la mémoire 18. Lorsque la ligne L/E est dans un deuxième état le sélecteur 21 relie la sortie du compteur d'écriture aux entrées d'adresses de la mémoire 18. La ligne L/E est également reliée à l'entrée C de commande lecture ou d'écriture de la mémoire de correction 18, pour que, lorsque la ligne L/E est dans le premier état, la mémoire 18 soit commandée dans le mode de lecture et que son contenu soit lu aux adresses indiquées par les sorties d'adresses du séquenceur d'adresses de lecture 19 et que, lorsque la ligne L/E est dans le deuxième état, la mémoire 18 soit placée dans le mode d'écriture et que son contenu puisse être modifié aux adresses indiquées par le contenu du compteur d'écriture 20. La mémoire de correction 18 comprend également des entrées de données D reliées à des lignes de données 15. Lorsque la mémoire 18 est commandée dans le mode écriture, par l'état de la ligne L/E, les données placées sur la ligne 15 par la mémoire centrale du calculateur 3 sont écrites dans la mémoire de correction 18 à l'adresse indiquée par le contenu du compteur d'écriture 20. L'adresse contenue dans le compteur d'écriture 20 indique à la fois l'emplacement de la mémoire élémentaire $M_i$ du plan de mémoire et l'adresse de l'emplacement à l'intérieur de la mémoire élémentaire dans lequel la donnée doit être écrite. Dans le cas d'une réalisation d'une mémoire comprenant 16 mémoires élémentaires de 1k/octets, l'adresse du mot à écrire est codée à l'aide d'un mot de 14 bits, les quatre bits de poids fort donnant l'adresse de la mémoire élémentaire sélectionnée et les dix autres bits indiquant l'adresse de l'octet à écrire à l'intérieur de la mémoire sélectionnée. Dans ce type de réalisation le compteur d'écriture 20 est composé de quatorze basculeurs. Lorsque la mémoire 18 est commandée dans le mode de lecture par la ligne L/E, les données à lire sont adressées par le séquenceur 19 dont la sortie d'adresses indique la mémoire élémentaire et l'adresse du mot d'un octet à lire à l'intérieur de la mémoire élémentaire sélectionnée. Le mot sélectionné apparaît sur une des sorties $V_1$ à $V_{16}$ de la mémoire 18.

La structure du circuit de correction 7 est également représentée la figure 2. Le circuit de correction 7 est constitué par plusieurs convertisseurs numériques-analogiques 22 à 36 dont les entrées sont reliées respectivement aux sorties $V_1$ à $V_{15}$ de la mémoire 18 et dont les sorties délivrent des signaux analogiques au circuit de réglage 6 de la caméra. Le circuit de correction 7 comprend également un démultiplexeur 37, commandé par le séquenceur 19 qui oriente les octets lus dans la mémoire 18 et placés sur la sortie $V_{16}$, à l'entrée d'un convertisseur 38 constitué par un banc de registres de mémorisation reliés chacun par leurs sorties à un convertisseur numérique-analogique dont le nombre dépend du nombre de corrections à effectuer. Le banc de registre 38 est surtout utilisé pour effectuer des corrections statiques sur les signaux de la caméra qui n'entrainent pas, par leur nature, la nécessité d'être modifiés de façon fréquente, ce qui est le cas, par exemple de la correction des défauts de convergence, où l'on cherche à corriger un défaut de linéarité dans les directions de l'axe vertical Y et de l'axe horizontal X de l'image. Dans ce cas le dispositif de correction utilise un tableau à deux dimensions contenant les données de correction qui sont fonction de la position P(X,Y) du point analysé. Comme la distorsion entre la position du point analysé et la position vraie du point tel qu'il devrait être situé dans l'espace image peut être décrite dans chacune de ces directions par un infiniment petit d'ordre inférieur à 5, il suffit en fait d'un petit nombre de valeurs de correction repérables également dans le système de coordonnées X et Y de l'image pour réaliser correctement la fonction de convergence sur le signal de télévision. En fait, il est suffisant de quadriller l'espace image par une matrice constituée par 8 colonnes et 312 lignes et d'attribuer à chaque carré élémentaire de la matrice la valeur de correction correspondante, ceci correspond aux 8x312 sorties des convertisseurs numérique-analogique du convertisseur 38 de la figure 2. Les signaux analogiques de sortie du convertisseur 38 sont appliqués comme précédemment aux entrées des circuits de réglage de la caméra.

Les circuits de réglage de la caméra sont pour la plupart constitués par des amplificateurs de voies à gain variable agissant sur les grilles de commande ou les plaques de déviation de la caméra ou encore par des dispositifs de commande à distance de l'ouverture des diaphragmes des caméras. La structure de ces circuits fait partie de l'état de la technique et par conséquent n'a pas besoin d'être représentée pour la bonne compréhension de l'invention.

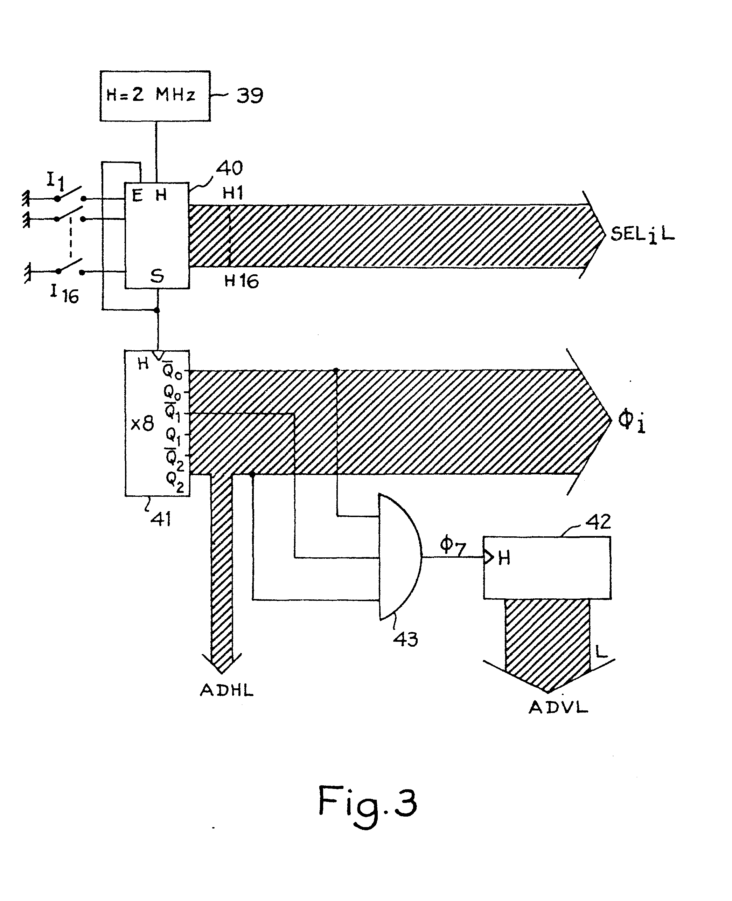

La structure du séquenceur 19 est représentée à la figure 3. Le séquenceur 19 comprend, une horloge de cadencement 39 délivrant des signaux de fréquence égale à 2 MHz à destination, d'une part, des circuits de balayage de la cible de la caméra non représentés et d'autre part, à l'entrée d'horloge H d'un registre à décalage 40 dont la sortie est rebouclée sur son entrée et qui est composée de 16 basculeurs montés en série et qui délivrent sur leurs sorties respectives les signaux d'horloge élémentaires $H_1$ à $H_{16}$. Le registre à décalage 40 est initialement chargé par le mot binaire de poids $\sum_{0}^{n=15} 2^n = 1$ représenté par l'état des interrupteurs $I_1$ à $I_{16}$ connectés respectivement par une de leurs extrémités sur les entrées parallèles du registre à décalage 40 et par leur autre extrémité à la masse générale d'alimentation du dispositif. L'état des interrupteurs est défini de façon que l'état de l'interrupteur $I_1$ soit ouvert et que l'état des autres interrupteurs $I_2$ à $I_{16}$ soit fermé. A l'initialisation, par exemple à la mise sous tension du dispositif, le signal $H_1$ a par exemple la valeur logique 1 et les signaux $H_2$ à $H_{16}$ ont la valeur 0. Aux instants d'horloge suivants, l'état 1 du premier basculeur est transmis successivement aux basculeurs suivants et est retransmis en fin de cycle à l'entrée du premier basculeur lorsqu'il apparaît à la sortie du registre à décalage 40. Le registre à décalage 40 permet par conséquent d'obtenir des signaux $H_1$ à $H_{16}$ qui prennent successivement l'état 1 logique pendant une durée de 0,6 microseconde dans un cycle de 8 microsecondes. Les signaux $H_1$ à $H_{16}$ sont transmis sur la ligne $SEL_iL$ à destination du calculateur 3 et sur l'entrée correspondante du sélecteur 21 pour adresser l'une des seize mémoires élémentaires des moyens de mémorisation 18. La sortie série du registre 40 est reliée à l'entrée H d'un compteur 41 pour assurer la progression des adresses horizontales des mémoires élémentaires de la mémoire de correction 18. Le compteur 41 comprend trois basculeurs pour former une capacité de comptage de 8. Les sorties $Q_0$ à $Q_2$ du compteur 41 sont reliées, d'une part, au calculateur 3 par la ligne $\Phi_i$ et d'autre part, à l'entrée correspondante du sélecteur 21 pour adresser les lignes verticales d'adresses des mémoires élémentaires de la mémoire de correction 18. Le séquenceur 19 comprend également un compteur 42 qui assure la progression des adresses des lignes horizontales des mémoires élémentaires de la mémoire de correction 18. Dans l'exemple de réalisation de l'invention, la capacité du compteur 42 est de 312, il se compose de neuf basculeurs dont les sorties sont reliées aux entrées correspondantes du sélecteur 21 pour adresser les lignes horizontales correspondantes de la mémoire de correction 18. L'entrée d'horloge H du compteur 42 est reliée au compteur 41 par l'intermédiaire de la porte ET 43 à trois entrées dont une première entrée est reliée à la sortie $Q_2$ du compteur 41, une deuxième entrée est reliée à la sortie $\overline{Q_1}$ du compteur 41 et une troisième entrée est reliée à la sortie $\overline{Q_0}$ du compteur 41.

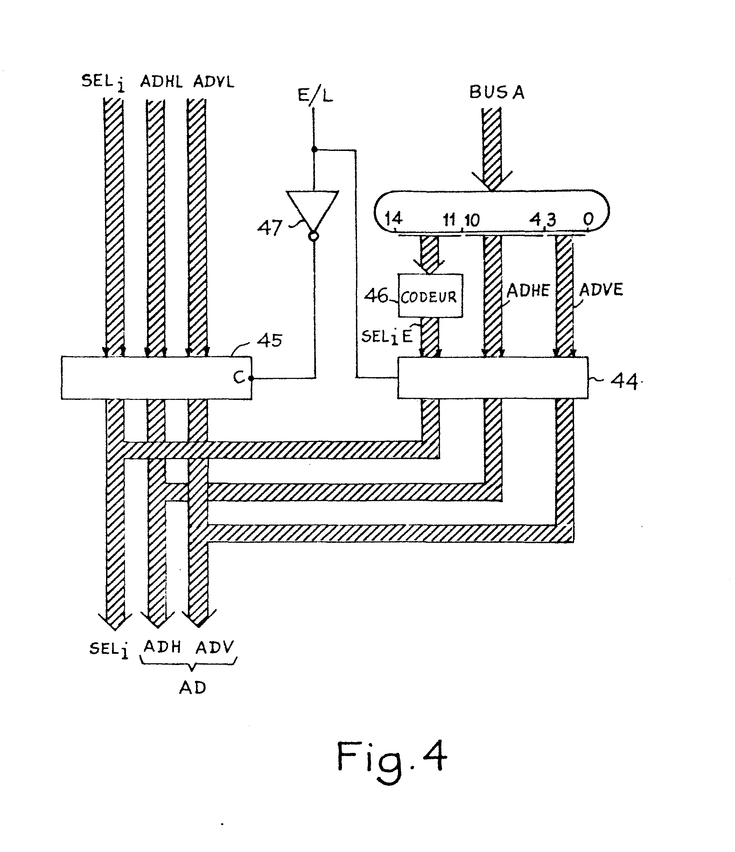

Le sélecteur 21 est représenté à la figure 4 et comprend deux verrous 44 et 45 composés, chacun, par des amplificateurs du type à trois états transmettant sur leurs sorties les états 0 et 1 logiques avec une faible impédancé de sortie lorsqu'ils sont commandés sur leurs entrées C de commande par un signal présentant un premier état, et ayant une impédance de sortie très élevée lorsqu'ils sont commandés sur leur entrée C de commande par un signal se trouvant dans un deuxième état. Les entrées du verrou 44 sont reliées à la ligne d'adresse BUSA du calculateur directement par les conducteurs ADHE et ADVE et indirectement aux conducteurs de la ligne d'adresse BUSA restants par l'intermédiaire du codeur 46. Les conducteurs ADVE et ADHE transmettent, respectivement, les quatre premiers bits $A_0$ à $A_3$ de poids faible de l'adresse de l'octet à écrire et les sept bits suivants $A_4$ à $A_{10}$ aux entrées respectives des éléments de mémorisation de la mémoire 18 par l'intermédiaire du verrou 44. Les conducteurs restants transmettent les bits d'adresses $A_{11}$ à $A_{14}$ de sélection des mémoires élémentaires à l'entrée du codeur 46. Le codeur 46 comprend seize sorties qui sont reliées par seize conducteurs aux entrées respectives de sélection des mémoires élémentaires par l'intermédiaire du verrou 44. Le verrou 44 est relié sur son entrée de commande C au conducteur d'écriture-lecture E/L , pour transférer, lorsqu'il est commandé par le calculateur 3, les bits d'adresse présents sur les conducteurs ADVE, ADHE, et les signaux de sélection $SEL_iE$ provenant du codeur 6 sur les conducteurs correspondants des lignes d'adresses ADH ADV, $SEL_i$ reliant la sortie du sélecteur aux entrées d'adresses de la mémoire de correction 18.

Les entrées du verrou 45 sont reliées respectivement aux sorties respectives ADHL, ADVL des compteurs 41 et 42 et aux sorties $H_1$ à $H_7$. du registre à décalage 40 par l'intermédiaire de la ligne $SEL_iL$ du séquenceur 19. L'entrée de commande du verrou 45 est reliée au conducteur d'écriture-lecture E/L par l'intermédiaire de l'amplificateur inverseur 47, pour transférer lorsqu'il est commandé par le calculateur 3, les bits d'adresse présents sur les conducteurs ADVL, ADHL et les signaux de sélection $SEL_iL$ sortant du registre à décalage 40 sur les conducteurs correspondant des lignes d'adresses ADV, ADH et $SEL_i$ reliant la sortie du sélecteur aux entrées d'adresses des moyens de mémorisation 18.

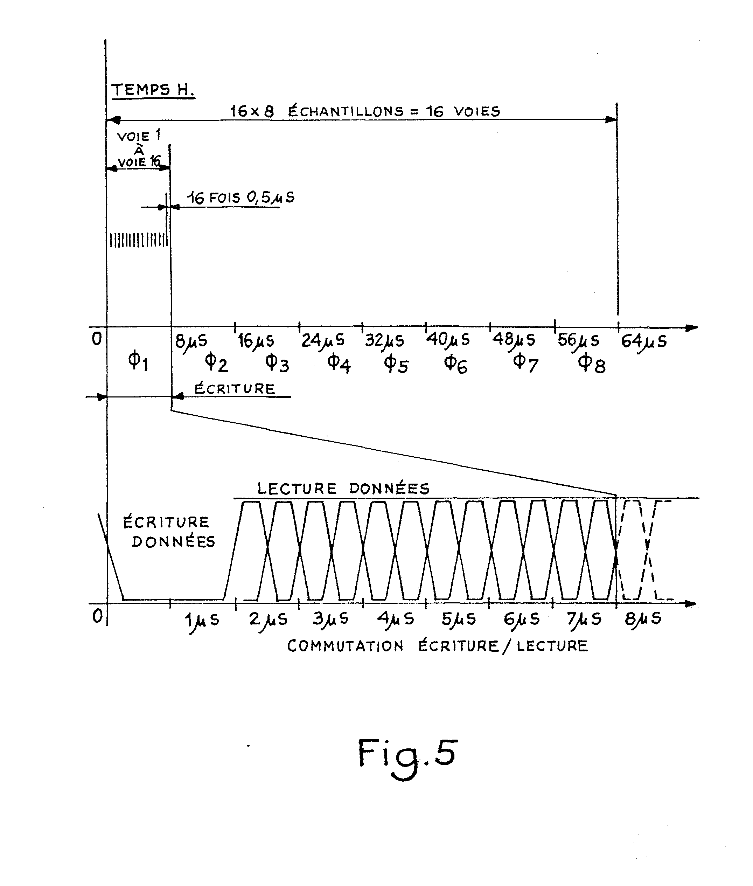

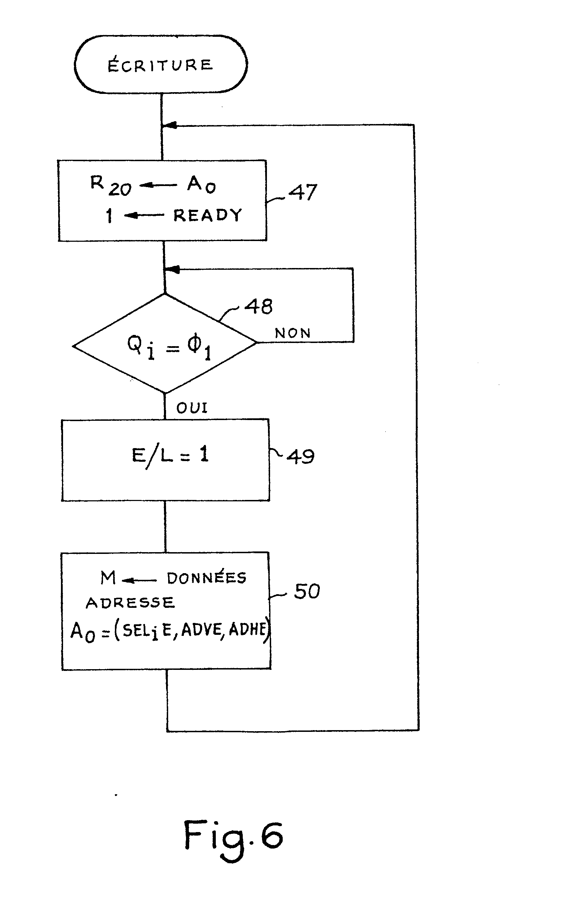

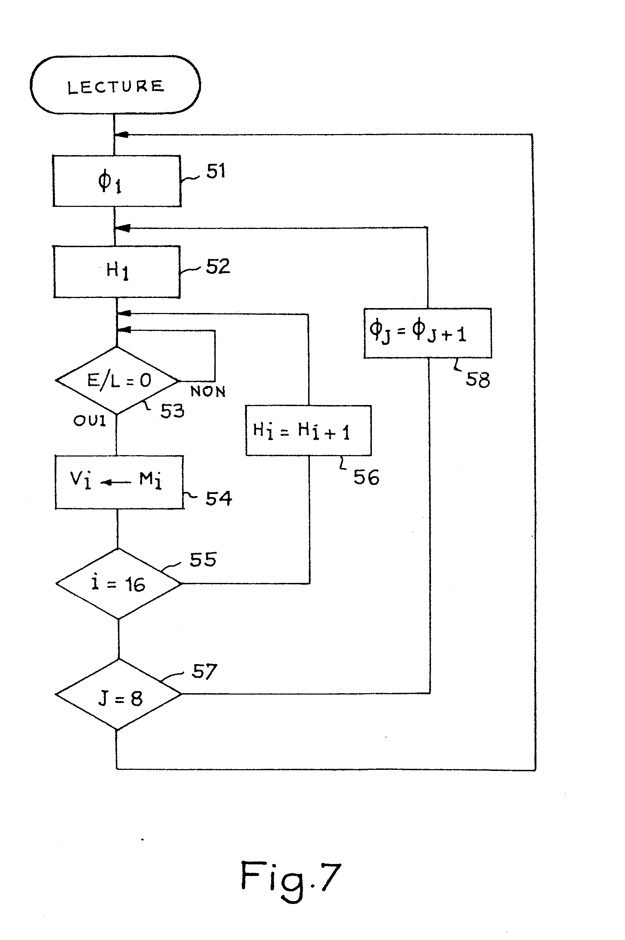

Le fonctionnement du dispositif qui vient d'être décrit est maintenant explicité à l'aide du diagramme de temps de la figure 5 et des organigrammes des figures 6 et 7.

Le diagramme des temps de la figure 5 représente les instants durant lesquels les données de correction sont écrites ou lues dans la mémoire de correction 18. Sur ce diagramme l'axe horizontal des temps correspond à la période standard de 64 micro-secondes de balayage d'une ligne horizontale d'une image de télévision. La durée de balayage de 64 microsecondes est partagée en 8 intervalles, ayant chacun une durée de 8 micro-secondes, et chaque intervalle est à son tour partagé en 16 intervalles élémentaires de 0,5 micro-secondes. Les intervalles de temps élémentaires de 0,5 micro-secondes sont obtenus à partir des signaux $H_1$ à $H_{16}$ délivrés par le registre à décalage 40, et à partir des intervalles de temps de 8 micro-secondes fournis par le compteur 41 cadencé à partir du registre 40 et dont les huit états $\overline{\phi}_1$ à $\overline{\phi}_8$ ont des durées respectives de 8 micro-secondes. Les signaux $H_1$ à $H_{16}$ permettent la sélection dans le temps en mode de lecture par la ligne $SEL_iL$ des seize mémoires élémentaires de la mémoire de correction 18. Pour ne pas perturber le fonctionnement de la caméra, le premier intervalle $\overline{\phi}_1$ de 8 microsecondes est réservé pour effectuer les opérations de lecture ou d'écriture sur les mémoires élémentaires et les intervalles suivants, $\overline{\phi}_2$ à $\overline{\phi}_8$, sont réservés pour effectuer que des opérations de lecture de la mémoire de correction 18. Les états des signaux $H_1$ à $H_{16}$ et $\overline{\phi}_1$ à $\overline{\phi}_8$ sont transmis au calculateur par les conducteurs de liaison correspondants et provoquent dans celui-ci des interruptions de programmes pour déclencher automatiquement des procédures d'entrées-sorties de données de correction à destination de la mémoire de correction 18. Ces opérations d'entrées-sorties sont par conséquent effectuées en synchronisme avec les signaux $H_1$ à $H_{16}$ et $\overline{\phi}_1$ à $\overline{\phi}_8$ délivrés par le séquenceur 19. Une procédure d'entrée-sortie peut être effectuée soit pour lire, soit pour écrire, des données dans la mémoire de correction 18. Les opérations de lecture ou d'écritre sont commandées par le calculateur 3 en plaçant la ligne d'écriture-lecture E/L dans un premier état, (état 1 logique), lorsque le calculateur exécute une opération d'écriture et dans un deuxième état, (état 0 logique), lorsque le calculateur exécute une opération de lecture. Lorsqu'une opération d'écriture est exécutée par le calculateur, les opérations représentées par l'organigramme de la figure 6 sont effectuées.

A l'étape 47 le sélecteur 21 est commandé par l'état 1 logique présent sur la ligne L/E pour connecter l'entrée de la mémoire de correction 18 sur la sortie du compteur d'écriture 20. La commande de chargement du compteur d'écriture 20 est effectuée par le signal READY transmis par le conducteur correspondant reliant l'entrée de commande du compteur d'écriture 20 au calculateur 3. Comme l'opération d'écriture ne peut être effectuée que durant le premier état $\overline{\phi}_1$ du compteur 41, le calculateur positionne la ligne d'écriture-lecture E/L dans l'état 1 logique lorsqu'il a vérifié à l'étape 48 que le compteur 41 est dans l'état $\phi_1$. Lorsque cette condition est réalisée, l'étape 50 est exécutée et la donnée de correction est placée par le calculateur sur la ligne de données 15, pour être écrite dans l'élément de mémoire de la mémoire de correction 18 à l'adresse contenue dans le compteur d'écriture 20. Lorsque l'opération d'écriture est terminée le programme d'entrée-sortie du calculateur retourne au début d'exécution de l'étape 47 pour inscrire une autre donnée dans la mémoire de correction 18 ou retourne à l'exécution du programme interrompu lors de l'apparition de l'état $\bar{\phi}_1$ du compteur 41 ou exécute une opération de lecture de la mémoire de correction 18.

Un exemple de réalisation d'une procédure d'entrée-sortie de lecture des informations contenues dans la mémoire 18 est représentée à la figure 7. D'après l'organigramme représenté à la figure 7 l'ensemble des seize mémoires élémentaires de la mémoire de correction 18 peut être lu durant chacun des intervalles $\bar{\phi}_1$ à $\bar{\phi}_8$. Sur le diagramme de la figure 7 la première opération de lecture, est représentée à l'étape 51 qui figure une opération de lecture durant l'intervalle de temps $\bar{\phi}_1$, et dans cet intervalle de temps $\bar{\phi}_1$ une lecture du premier élément de mémorisation durant l'intervalle de temps $H_1$ figuré à l'étape 52. A l'étape 53 le calculateur positionne l'état de la ligne E/L à l'état 0 logique, puis à l'étape 54, le contenu de la première mémoire élémentaire situé à l'adresse indiquée par le compteur 41 et le compteur 42 du séquenceur 19, est placé sur la ligne $V_1$ pour être converti par le convertisseur numérique-analogique 22 en une tension continue directement appliquée à l'entrée du circuit de réglage correspondant. A l'instant $H_2$ suivant, défini par l'étape 56, le calculateur exécute une opération de lecture de l'élément de mémorisation $M_2$ de la mémoire de correction 18 par une nouvelle exécution des étapes 53 et 54. Les éléments de mémorisation $M_1$ à $M_{16}$ sont de cette façon successivement lus et leur contenu est appliqué respectivement aux entrées des convertisseurs numériques-analogiques 22 à 36 et à l'entrée du multiplexeur 37. A l'étape 55, lorsque l'ensemble des seize éléments de mémorisation a été lu, le calculateur exécute une lecture, durant la phase $\bar{\phi}_2$, représentée par l'état du compteur 41 en exécutant à nouveau l'ensemble des étapes 52 à 56. Lorsqu'à l'étape 57, l'ensemble des huit phases du compteur 41 ont été parcourues, le calculateur retourne à l'étape 51 pour exécuter une nouvelle lecture des moyens de mémorisation 18 durant la ligne de balayage de l'image de télévision suivante ou retourne au programme interrompu pendant l'exécution de la procédure d'entrée-sortie de lecture, ou retourne à l'exécution d'une opération d'écriture pendant la phase $\bar{\phi}_1$ suivante.

Les diverses opérations de lecture et d'écriture de la mémoire de correction 18 peuvent être effectuées soit à la mise en route de la caméra soit en cours de fonctionnement de la caméra ou encore lorsque la caméra n'effectue pas de prises de vues effectives susceptibles d'être retransmises sur le réseau de distribution des images de télévision.

A la mise en route de la caméra, le calculateur recherche dans la mémoire de masse 13 les données de correction qui correspondent à la tête de caméra, à la voie et au programme d'utilisation demandé. Ce programme peut correspondre à une exploitation de la caméra à l'extérieur durant la période d'été en plein soleil etc...

Dans ce mode de fonctionnement, les données sont supposées avoir été élaborées par avance et sauvegardées sur un support d'enregistrement tel qu'une disquette. Un programme d'initialisation transfère les données contenues dans la mémoire de masse vers les mémoires de correction associées à la tête de caméra et aux voies. Lorsque la période d'initialisation est terminée, le calculateur exécute les programmes nécessaires au fonctionnement normal de la caméra en déroulant un programme de contrôle des signaux de sortie de la caméra. Le calculateur active le pupitre de commande de la caméra et exécute les programmes de contrôle de fonctionnement de celles-ci ainsi que les ordres introduits au clavier du pupitre 4 qui concernent les modifications de réglage, de mesures ou de commutation de signaux sur le moniteur.

En cours de fonctionnement normal de la caméra, le calculateur assume deux tâches distinctes dont le détail peut varier selon la programmation du calculateur, une première tâche consiste à transmettre les ordres du pupitre 4 vers les mémoires de correction 18 qui sont associés aux équipements de voies, la deuxième tâche consiste à exécuter les programmes demandés par l'opérateur par l'intermédiaire du pupitre 4 et qui concernent la correction des voies, le contrôle de l'ensemble et les mesures des signaux vidéo transmis par la caméra. Ces programmes peuvent être exécutées également dans un cycle de surveillance continue des paramètres du dispositif de correction.

Lorsque la caméra n'est pas en fonctionnement, le calculateur peut toutefois continuer de gérer et d'automatiser les réglages et la maintenance périodique de la caméra. Pour réaliser cette fonction, il sera alors nécessaire d'adjoindre au calculateur, sur les portes d'entrée-sortie de l'unité centrale, des unités périphériques permettant de générer des signaux de mesure optiques ou électroniques afin de lancer des procédures automatisées de contrôle et de réglage.

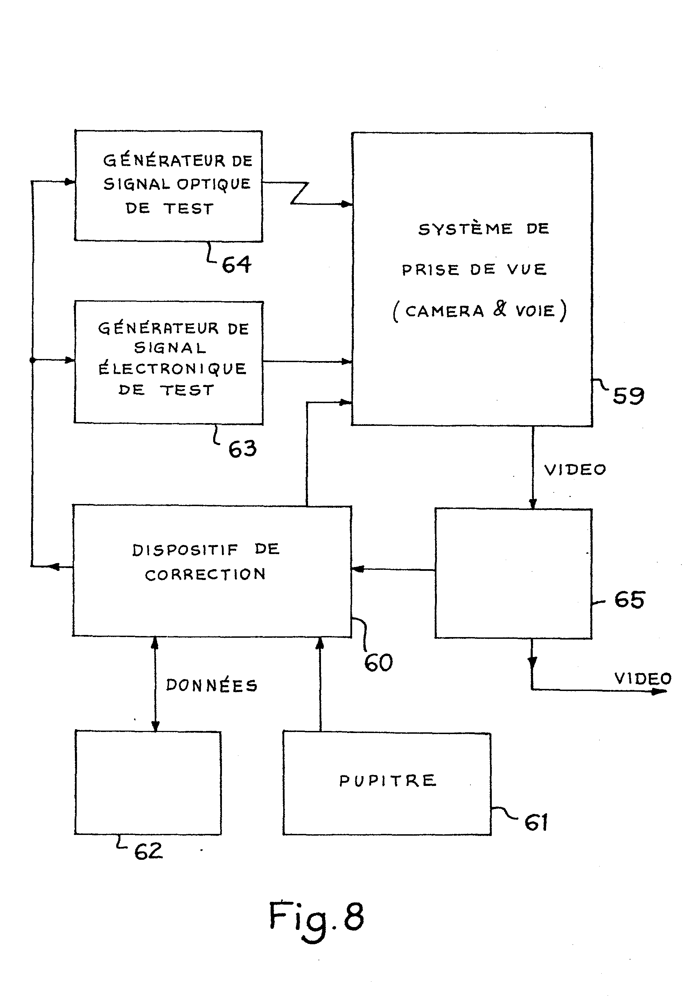

Un système d'établissement automatique des données de correction est représenté à la figure 8. Ce système comprend un dispositif de prise de vues composé d'une caméra et d'un équipement de voies 59, d'un dispositif de correction 60 des paramètres de la caméra correspondant au dispositif de correction précédemment décrit, d'un pupitre de commande 61 correspondant au pupitre 4 précédemment décrit, d'une mémoire de masse 62 composée d'une disquette correspondant à la mémoire 13 précédemment décrite, d'un générateur de signal électronique de test 63, d'un générateur de signal optique de test 64, et d'un dispositif de saisie des signaux de télévision obtenus en sortie de la caméra et de l'équipement de voies 65. Le générateur de signal électronique de test 63 est commandé par le calculateur du dispositif de correction 60 et délivre des signaux de test au système de prise de vues 59. Pour réaliser le système de la figure 8, on pourra utiliser comme générateur de signal électronique de test 63 des générateurs qui fournissent la plupart des signaux nécessaires aux tests courants des appareils de télévision. Un exemple de réalisation de ces générateurs est décrit dans la demande de brevet français n° 82 004 752. Le dispositif de saisie du signal vidéo 65 transmis par le système de prise de vues 59 pourra être constitué également de façon connue par un dispositif pouvant transformer le signal vidéo en un signal numérique directement utilisable pour le calculateur 3 du dispositif de correction 60. Un exemple de réalisation de ces dispositifs pourra être trouvé dans la description de la demande de brevet français n° 82 004 753.

Le fonctionnement du système d'établissement automatique des données de correction est le suivant. Le générateur de signal optique de test 64 est placé devant l'objectif de la caméra qui prend l'image de la mire optique équipant le générateur de signal optique 64, et la transforme en signaux vidéo qui sont appliqués à l'entrée du dispositif de saisie 65. Le dispositif de saisie 65 transforme les signaux numériques qu'il transmet à l'entrée du dispositif de correction 60. Une image de la mire optique composée du même nombre N d'échantillons numériques est également contenue dans les moyens de mémorisation associés à l'unité de traitement des données du dispositif de correction et la grandeur de ces échantillons est comparée aux échantillons correspondant de la suite d'échantillons transmis par le dispositif de saisie 65. L'unité de traitement détermine ainsi pour chaque échantillon transmis par le dispositif de saisie 65, son écart avec l'échantillon correspondant contenu dans les moyens de mémorisation du calculateur, et cet écart correspond à la correction qu'il faut apporter au circuit de réglage des circuits de déviation de la caméra pour obtenir une amplitude correcte de l'échantillon obtenu par le dispositif 65. Cet écart est mémorisé dans l'élément de mémorisation correspondant de la mémoire de correction 18 du dispositif de correction 60. Dans une variante d'utilisation, on pourra utiliser un motif blanc transmis par le générateur de signal optique de test 64 dont la position sera facilement reconnaissable par le dispositif de saisie des signaux vidéo sortant de la caméra. Le calculateur du dispositif de correction 60 détermine la position P(X,Y) du motif et en déduit l'écart E(XY) obtenu avec le point vrai transmis par le générateur de signal optique de test. Cet écart est enregistré dans une mémoire élémentaire de la mémoire de correction 18. Lorsque cette opération est terminée, le calculateur déplace la position du motif dans le générateur de signal optique en un autre point, pour mémoriser à nouveau l'écart constaté entre la position vraie du motif et sa position détectée par le dispositif de saisie 65.

Une méthode de réglage identique à la précédente peut être réalisée également à l'aide du générateur de signal électronique de test 63. Sur la commande du calculateur du dispositif de correction 60, le générateur de signal électronique de test 63 envoie des signaux de test calibrés à l'entrée des circuits de la caméra ou de l'équipement de voies qui restituent ces signaux au dispositif de saisie 65. Le dispositif de correction 60 examine alors la réponse des signaux vidéo obtenus et envoie des signaux de correction à la mémoire de correction 18 pour ajuster le gain ou les paramètres des fonctions de transfert des circuits correspondants de la caméra ou de l'équipement de voies.

Selon une autre variante d'utilisation, une procédure manuelle consistera à présenter à la caméra une mire de géométrie et de convergence et à entrer à partir du pupitre de commande du calculateur 61 un tableau de valeurs correspondant aux distorisons constatées par le moniteur couleur de contrôle de l'équipement de voies. Ces valeurs de correction seront alors transmises, par le calculateur du dispositif 60 comme précédemment, aux mémoires de correction des données de correction 18.

Bien que les principes de la présente invention soient décrits ci-dessus en relation avec des exemples particuliers de réalisation, on comprendra également que la description n'a été faite qu'à titre d'exemple et ne limite pas la portée de l'invention.

0092465

## REVENDICATIONS

1. Dispositif de commande de correction d'une caméra (1) de télévision reliée à un équipement de voies de caméra (2), caractérisé en ce qu'il comprend une mémoire de masse (13) contenant les données de correction de la caméra, une mémoire de correction (5, 8, 18), un calculateur numérique (3) pour transférer automatiquement les données de correction contenues dans la mémoire de masse (13) à l'intérieur de la mémoire de correction, ainsi que des circuits de correction (7, 10) sensibles aux données de correction contenues dans la mémoire de correction (5, 8, 18) pour agir sur les circuits de réglage de la caméra (6) et/ou de l'équipement de voies (2).

2. Dispositif selon la revendication 1, caractérisé en ce que la mémoire de masse (13) est une mémoire à disque.

3. Dispositif selon l'une quelconque des revendications 1 et 2, caractérisé en ce que la mémoire de correction est une mémoire vive (18) adressée par des moyens d'adressage (19, 20, 21) commandés par le calculateur et agissant en synchronisme avec le balayage de la cible de la caméra.

4. Dispositif selon la revendication 3, caractérisé en ce que les moyens d'adressage (19, 20, 21) de la mémoire de correction sont constitués par un séquenceur d'adresse de lecture (19), un compteur d'écriture (20) et un sélecteur d'adresse (21) pour aiguiller l'adresse fournie par le séquenceur d'adresse (19) ou l'adresse contenue dans le compteur d'écriture (20) à l'entrée d'adresse de la mémoire de correction (18) pour lire ou écrire les données de correction dans des emplacements de la mémoire de correction (18).

5. Dispositif selon l'une quelconque des revendications 1 à 4, caractérisé en ce que la mémoire de correction (18) est constituée par plusieurs mémoires élémentaires ($M_1$ ... $M_{16}$) de correction.

6. Dispositif selon la revendication 5, caractérisé en ce que les sorties des données de chaque mémoire élémentaire sont reliées chacune à un circuit de correction.

7. Dispositif selon l'une quelconque des revendications précédentes, caractérisé en ce que chaque circuit de correction comprend un convertisseur numérique-analogique (22, 36, 38) relié par ses entrées aux sorties d'une mémoire élémentaire et par sa sortie à l'entrée d'un circuit de réglage (6) de la caméra.

8. Dispositif selon l'une quelconque des revendications 1 à 7, caractérisé en ce que l'écriture des données dans la mémoire de correction (18) est effectuée par le calculateur (3) seulement en début du balayage de ligne de la caméra.

9. Dispositif selon l'une quelconque des revendications 1 à 8, caractérisé en ce que le calculateur numérique est constitué par un micro-ordinateur.

10. Système d'établissement automatique des données de correction d'une caméra (59) de télévision , caractérisé en ce qu'il comprend un dispositif de correction selon l'une quelconque des revendications 1 à 9, couplé d'une part à un générateur de signaux de test (63, 64) de la caméra et d'autre part à un dispositif de saisie (65) et d'échantillonnage des signaux générés par la caméra (59) pour élaborer des données de correction afin de commander les circuits de réglage de la caméra lorsque les amplitudes des signaux vidéo reçus par le dispositif de saisie sont différentes de celles émises par le générateur de signaux de test.

11. Système selon la revendication 10, caractérisé en ce que le générateur de signaux de test est un générateur de mire de télévision optique (64).

12. Système selon la revendication 11, caractérisé en ce que le générateur de signaux de test est un générateur de signaux électroniques de test (62).

Fig.1

0092465

Fig.2

Fig.3

SEL_i ADHL ADVL      E/L                    BUS A

47

14      11 10        4,3    0

46 CODEUR            ADHE    ADVE

SEL_iE

45

C                              44

SEL_i ADH ADV
      \_____/
        AD

Fig. 4

Fig.5

Fig. 6

Fig.7

GÉNÉRATEUR DE
SIGNAL OPTIQUE
DE TEST
64

GÉNÉRATEUR DE
SIGNAL
ÉLECTRONIQUE
DE TEST
63

SYSTÈME DE
PRISE DE VUE
(CAMERA & VOIE)
59

VIDEO

DISPOSITIF DE
CORRECTION
60

65

VIDEO

DONNÉES

PUPITRE
61

62

Fig.8

0092465

# RAPPORT DE RECHERCHE EUROPEENNE

Office européen
des brevets

Numéro de la demande

EP 83 40 0725

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | FR-A-2 455 411 (TOKYO SHIBAURA DENKI K.K.)<br>* Page 6, ligne 34 - page 7, ligne 32 * | 1,3-7, 9-12 | H 04 N 9/04 |
| Y | US-A-4 123 782 (KITAHARA et al.)<br>* Colonne 2, lignes 58-66 * | 1 | |
| Y | US-A-4 285 004 (MORRISON)<br><br>* Colonne 4, ligne 34 - colonne 7, ligne 62 * | 3-7,9-12 | |

---

|  | DOMAINES TECHNIQUES RECHERCHES (Int. Cl. 3) |
|---|---|
|  | H 04 N |

Le présent rapport de recherche a été établi pour toutes les revendications

| Lieu de la recherche | Date d'achèvement de la recherche | Examinateur |
|---|---|---|
| LA HAYE | 21-07-1983 | CRISTOL Y. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82